(19) Europäisches Patentamt
European Patent Office
Office européen des brevets

(11) Veröffentlichungsnummer : **0 077 924**
**B1**

(12) **EUROPÄISCHE PATENTSCHRIFT**

(45) Veröffentlichungstag der Patentschrift : **30.07.86**

(51) Int. Cl.$^4$ : **A 61 M 1/16**, B 01 D 13/00

(21) Anmeldenummer : **82108745.9**

(22) Anmeldetag : **22.09.82**

(54) **Vorrichtung zur Entfernung von toxischen Stoffen aus biologischen Flüssigkeiten.**

(30) Priorität : **24.09.81 DE 3138107**

(43) Veröffentlichungstag der Anmeldung : **04.05.83 Patentblatt 83/18**

(45) Bekanntmachung des Hinweises auf die Patenterteilung : **30.07.86 Patentblatt 86/31**

(84) Benannte Vertragsstaaten : **BE FR GB IT NL SE**

(56) Entgegenhaltungen :
**DE-A- 1 798 340**
**DE-A- 2 719 814**
**GB-A- 2 009 623**
**US-A- 3 972 812**
**US-A- 4 059 512**
**CHEMIE INGENIEUR TECHNIK, Band 52, Jahrgang 1980, Verlag Chemie GmbH R. MARR, A. KOPP "Flüssigmembran-Technik", Seiten 399-410**
**BIOMEDIZINISCHE TECHNIK, Band 25, Heft 11, November 1980, Fachverlag Schiele & Schön GmbH M. ARNDT et al. "Entfernung von Mercaptanen aus Rinderserum und-blut durch Extraktion mit Hilfe einer Flüssigmembranemulsion" Seiten 278-282**

(73) Patentinhaber : **Fresenius AG**
**Gluckensteinweg 5**
**D-6380 Bad Homburg (DE)**

(72) Erfinder : **Mathieu, Bernd, Dr.**
**Am unteren Galgenberg 19**
**D-6683 Spiesen (DE)**
Erfinder : **Brunner, Gorig, Prof. Dr. med.**
**Wietzeufer 6**
**D-3000 Hannover 61 (DE)**

(74) Vertreter : **Luderschmidt, Wolfgang, Dr. Dipl-Chem.**
**Sonnenberger Strasse 100**
**D-6200 Wiesbaden (DE)**

**EP 0 077 924 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zur Entfernung von toxischen Stoffen aus biologischen Flüssigkeiten gemäß dem Oberbegriff des Anspruchs 1.

Beim akuten Leberversagen kommt es vorübergehend u.a. zum nahezu vollständigen Ausfall der Entgiftungsfunktion. Diese Funktion spielt insofern eine besondere Rolle, als im Leberversagen hohe Spiegel an endogen entstehenden Toxinen auftreten, die durch eine Hemmung cerebraler Funktionen den komatösen Zustand verursachen und überdies die Entgiftungsfunktion der noch intakten Leberzellen hemmen. Hierdurch kommt es im fortgeschrittenen Stadium zu einem Prozeß, der sich ständig hochschaukelt und letztlich im Tod des Patienten endet.

Normalerweise werden derartige Toxine, die im überwiegenden Maße aus Phenolen, Merkaptanen und Fettsäuren bestehen, durch chemische Umwandlung (Hydroxilierung und Konjugierung) in der Leber selbst in einen wasserlöslichen Zustand überführt, so daß sie durch die Niere ausgeschieden werden können. Dieser Vorgang läuft auf enzymatischem Wege ab ; beispielsweise werden Stoffe, wie Phenole u. dgl., an die Glucuronsäure mit Hilfe von Uridindiphosphoglucuronyltransferase (UDPGT) in Form der Glucuronide gekoppelt, die in Wasser löslich sind und über die Niere ausgeschieden werden können.

Es wurden daher zahlreiche Versuche unternommen, diese enzymatische Umwandlung zur Entfernung der Toxine beim Leberkoma nutzbar zu machen. Beispielsweise wurden heterologe Leberhomogenate oder Lebergewebsscheiben, welche durch eine Membran vom Blut getrennt waren, eingesetzt, die jedoch schnell ihre Funktion verloren und überdies den Toxinaustausch, wenn überhaupt, nur sehr verzögert zuließen. Auch der Einsatz von ganzen Tierlebern brachte keinen Erfolg, da diese zum einen gewebsunverträglich sind und zum anderen nicht ausreichend ernährt wurden.

Es wurde daher in zunehmendem Maß der Einsatz von Adsorbenzien, insbesondere Aktivkohle vorgeschlagen, also den vermehrten Einsatz der Hämoperfusion (vgl. Brunner u. Schmidt, Artificial Liver Support, Springer-Verlag, Berlin, 1981, S. 46 ff). Dieses Verfahren ist jedoch hochgradig unspezifisch, so daß nicht nur Toxine, sondern auch eine außergewöhnlich hohe Anzahl von lebenswichtigen Substanzen aus dem Blut entfernt werden. Dabei sinkt beispeilsweise der Spiegel der im Blut befindlichen Hormone nahezu auf Null ab, so daß die Schäden einer solchen Behandlung größer sind als ihr Nutzen.

Auch bei der Hämodialyse, durch die in Wasser gelöste Stoffwechselprodukte entfernt werden, ist ebenfalls nur eine unspezifische Abtrennung von überdies nur wasserlöslichen Substanzen möglich, so daß die üblicherweise hydrophoben Toxine in aller Regel nicht in ausreichendem Maße entfernt werden können.

Es wurden daher Versuche mit einem Flüssigmembranenzymreaktor (vgl. vorstehende Monographie S. 219) unternommen, um mit der Flüssigmembrantechnik die Lebertoxine zu entfernen. Diese Flüssigmembrantechnik der eingangs erwähnten Art geht auf die grundlegenden Arbeiten von Li zurück, wie sie beispielsweise in den deutschen Patentschriften 16 19 867, 22 22 067, 25 18 742, 21 48 098, 24 34 550 sowie der US-PS 34 10 794, 37 79 907 u. dgl. beschrieben sind. Die Flüssigmembrantechnik stellt ein gleichzeitig ablaufendes Extraktions-/Abstreifverfahren dar, bei dem eine dispergierte Emulsion anstelle eines reinen Lösungsmittels als Abtrennphase benutzt wird. Die Bezeichnung « Flüssigmembran » bezeichnet im allgemeinen eine flüssige Komponente einer Multi-Emulsion, die zwei miteinander in aller Regel mischbare Flüssigkeiten trennt. So können Blut oder Serum, die die zu entfernenden Toxine enthalten, die eine Phase darstellen, in der eine Vielzahl von Tröpfchen emulgiert ist, deren Oberfläche die Flüssigmembran darstellt. Diese Tröpfchen enthalten wiederum innerhalb dieser Membran eingeschlossen eine zweite Phase, die das Reaktionsmittel, beispielsweise die extrahierende Flüssigkeit, enthält.

Eine derartige Emulsion wird dadurch hergestellt, daß man das Reaktionsmittel in eine Flüssigkeit verschiedener Polarität tropft, dem oberflächenaktive Mittel zugesetzt sind. So kann beispielsweise eine wässrige Lösung in einen hochkettigen Kohlenwasserstoff, beispielsweise Paraffin, eingetropft werden, der vorzugsweise ionisch oberflächenaktive Mittel enthält. Hierdurch wird eine stabile Emulsion gebildet, die die wässrige Lösung in Tröpfchenform eingeschlossen enthält, wobei das Paraffin die Kugeloberfläche bzw. -schicht, somit also die Flüssigmembran darstellt. Die Stabilisierung einer derartigen Emulsion ist auf die Wirkung der oberflächenaktiven Mittel zurückzuführen, die ein bipolares Reagenz darstellen, das einerseits mit seiner üblicherweise hydrophoben Kohlenwasserstoffkette vom Paraffin und andrerseits mit seiner hydophilen, üblicherweise ionischen Endgruppe vom Wasser solvatisiert wird.

Eine derart hergestellte Emulsion wird mit der Flüssigkeit vermischt, die den abzutrennenden Stoff enthält. Legt man beispielsweise, wie in der vorstehenden Monographie, S. 219 ff, beschrieben, Phenol oder Naphtol in wässriger Lösung vor und vermischt diese Lösung mit einer Flüssigmembran-Emulsion, die eine Enzymlösung in sich eingeschlossen aufweist, so stellt man fest, daß das hydrophobe Phenol die hydrophobe Flüssigmembranschicht durchdringt, von der Enzymphase aufgenommen und in dieser durch entsprechende Umwandlung in ein hydrophiles Reaktionsprodukt umgewandelt wird, das nicht mehr durch die hydrophobe Membran rückdiffundieren kann. Somit kann eines der Schädlichsten Toxine aus einem System durch Extraktion mit Hilfe einer Flüssigmembran entfernt werden.

Obwohl die Extraktion mit der Flüssigmembrantechnik zunächst als besonders vorteilhaft erscheint, weist sie den Nachteil auf, daß die eingesetzten Emulsionen natürlich von dem zu reinigenden System

abgetrennt werden müssen, was zunächst einen zusätzlichen Arbeitsschritt darstellt. Die Abtrennung der Emulsion erfolgt entweder durch die natürliche Trennung zweier Phasen, durch Zentrifugieren oder durch Zusatz eines emulsionsbrechenden Mittels. Während im ersten Fall nicht sichergestellt ist, daß Restbestände der Emulsion in dem zu reinigenden System zurückbleiben, wird im zweiten Fall das gesamte System hohen Zentrifugalkräften unterzogen, die insbesondere bei biologischen Flüssigkeiten, wie Blut, zur Zerstörung der Blutkörperchen führen. Auch der Einsatz von emulsionsbrechenden Mitteln ist bei biologischen Flüssigkeiten nicht angebracht, da diese selbst im wesentlichen toxisch sind und somit für diese Zwecke nicht eingesetzt werden können.

Auch die natürliche Trennung der Emulsion von einem wässrigen System hat sich gerade bei biologischen Flüssigkeiten als nicht durchführbar erwiesen, da die Folgeerscheinungen nicht zu übersehen sind, wenn derartige Flüssigmembran-Emulsionen direkt mit Blut in Berührung gebracht werden.

Aus Chem.-Ing.-Tech. 52 (1980) S. 399-410 sind gestützte flüssige Membranen bekannt, die aus polymeren mikroporösen Membranen bestehen, deren Mikroporen mit organischen Flüssigkeiten gefüllt sind. Diese gestützten flüssigen Membranen sind zwar bei bestimmten Extraktionen zufriedenstellend, so daß eine technische Realisierung bei geeigneten Membranen möglich erscheint, jedoch ist die geeignete Ausführung einer derartigen gestützten flüssigen Membran zur Behandlung von biologischen Flüssigkeiten bisher nicht gefunden worden, da derartige Membranen besondere Voraussetzungen erfüllen müssen. So müssen diese Membranen für die biologische Flüssigkeit, insbesondere Blut, kompatibel sein, mit völlig untoxischen Flüssigkeiten gefüllt sein, die sich überdies im wesentlichen nicht von der porösen Membran ablösen dürfen, und überdies eine ausgezeichnete Trennwirkung aufweisen, um innerhalb kürzester Behandlungszeiten die gewünschte Trennung zu erhalten.

Eine Lösung dieser Probleme ist aber dieser Druckschrift nicht zu entnehmen, die sich vielmehr mit allgemeinen Ausführungen zur Flüssigmembrantechnik beschäftigt.

Die in der US-A 3 972 812 beschriebene Filterscheibe zur Separation des Blutserums ist zur Abtrennung von Toxinen aus Blut ebenfalls nicht geeignet, da diese Filterscheibe eine mechanische Barriere darstellt, die nur eine Abtrennung fester Teilchen von einer wäßrigen Flüssigkeit ermöglicht.

Der Erfindung liegt daher die Aufgabe zugrunde, eine Vorrichtung gemäß dem Oberbegriff des Anspruchs 1 so fortzubilden, daß biologische Flüssigkeiten, insbesondere Blut, schnell und wirksam von toxischen Substanzen befreit werden können.

Die Aufgabe wird durch die kennzeichnenden Merkmale des Anspruchs 1 gelöst.

Überraschenderweise wurde nunmehr festgestellt, daß die erfindungsgemäß eingesetzte gestützte flüssige Membran sowohl für Blut kompatibel ist, als auch die in der Membran enthaltene Flüssigkeit sich nicht hiervon abtrennt. Bei in vitro-Versuchen hat sich herausgestellt, daß die in der hydrophoben Membran enthaltene hydrophobe organische Flüssigkeit im wesentlichen vollständig in der mikroporösen Membran zurückbleibt, so daß auch nach stundenlangem Betrieb einer derartigen Membran kein optisches Ablösen der organischen Flüssigkeit aus der hydrophoben Membran ersichtlich ist.

Weiterhin werden gerade hoch toxische, hydrophobe Substanzen selektiv aus dem wässrigen System mit Hilfe dieser gestützten flüssigen Membran herausgelöst, so daß die vorstehenden Anforderungen vollständig erfüllt werden. Es ist also ein Trennsystem für biologische Flüssigkeiten aufgefunden worden, das einerseits mit Blut verträglich ist, wobei sich die in der Membran enthaltene Flüssigkeit nicht ablöst, und andrerseits hoch selektiv ist, so daß toxische Substanzen wirksam aus Blut entfernt werden können. Hierdurch ist es möglich, daß die beim Leberkoma im Blut vorhandenen toxischen Substanzen wirksam abgetrennt werden können, also eine irreversible Schädigung der Leber hierdurch vermieden werden kann.

Gegenüber der bekannten Flüssigmembrantechnik weist sie jedoch den Vorteil auf, daß die Herstellung von Emulsionen vollständig entfällt, was zur Folge hat, daß weder spezielle Reaktionsmittel in die sie umgebende Flüssigmembran eingebracht werden müssen, noch die Emulsion selbst mit dem zu reinigenden System vermischt werden muß. Weiterhin entfällt natürlich die Abtrennung der Emulsion aus dem System, so daß weder aufwendige Abtrennschritte notwendig sind, noch das zu reinigende System selbst wiederum von der Flüssigmembranemulsion befreit werden muß.

Das mit der erfindungsgemäßen Vorrichtung durchzuführende Verfahren setzt sich aus folgenden Arbeitsschritten zusammen :

1. Zunächst wird eine polymere Membran, die vorteilhafterweise die gleichen Polaritätseigenschaften wie die Flüssigmembran aufweist, mit der die Flüssigmembran bildenden Flüssigkeit getränkt. Kommt beispielsweise ein hydrophobes Medium, z. B. Paraffin u. dgl., als Flüssigmembran in Frage, so wird eine hydrophobe polymere Membran mit dieser Flüssigkeit getränkt.

2. Anschließend wird die zu reinigende Flüssigkeit auf der einen Seite der getränkten Membran entlanggeführt, während auf der anderen Seite das Reinigungssytem vorbeigeführt wird. Die im wässrigen System, beispielsweise Blut, vorliegenden Stoffe, wie die vorstehend genannten Lebertoxine, permeieren infolge ihrer hydrophoben Struktur die hydrophobe Flüssigmembran, bestehend aus der hydrophoben Flüssigkeit und dem Stützträger in Form einer polymeren Membran, und können auf der anderen Seite der Membran mit dem Reinigungssystem in Berührung treten, das vorteilhafterweise die abzutrennenden Stoffe in eine für die Rückdiffusion nicht mehr geeignete Form überführt. So können beispeilsweise Phenole enzymatisch nach dem vorstehenden Reaktionsschema aufgearbeitet werden,

wobei hydrophile Glucuronide entstehen, die im Reinigungssystem selbst verbleiben und nicht mehr durch die hydrophobe Flüssigmembran diffundieren können. Andrerseits können jedoch auch schwach sauer reagierende Verbindungen, wie Phenole, Merkaptane und Fettsäuren, durch Reaktion mit basischen Reaktionsmitteln, wie Natronlauge, in den ionischen Zustand überführt werden, in dem sie wiederum nicht mehr durch die Flüssigmembran rückdiffundieren können.

3. Nach der Behandlung mit dem Verfahren ist die zu reinigende Flüssigkeit im wesentlichen von den abzutrennenden Stoffen befreit und kann wunschgemäß wieder eingesetzt werden. Die Reinigungsflüssigkeit weist die abgetrennten Verunreinigungen auf und kann entweder verworfen oder aber nach entsprechender Abtrennung der Verunreinigungen wieder erneut eingesetzt werden.

Während bei dem bekannten Flüssigmembranverfahren die einzusetzende Emulsion direkt am Wirkungsort hergestellt werden muß, kann die polymere Membran bereits werksseitig mit der die Flüssigmembran bildenden Flüssigkeit getränkt und so konfektioniert werden, daß sie am Wirkort selbst sofort eingesetzt und nach der Reinigungsoperation entweder weggeworfen oder neu aufgearbeitet wird. So lassen sich beispielsweise zur Reinigung von Blut bereits werksseitig aus Membranen bestehende Filter herstellen, die mit dem entsprechenden Flüssigmembransystem getränkt und bereits sterilisiert sind, so daß sie bettseitig sofort einsetzbar sind. Demgemäß entfällt der Einsatz eines Reaktors, in dem Blut mit der bekannten Flüssigmembranemulsion gemischt und anschließend von dieser befreit werden muß, ohne daß sichergestellt ist, daß eine vollständige Abtrennung der Emulsion vorliegt. Bei dem Verfahren sind die beiden Phasen durch eine feste polymere Membran voneinander getrennt, die als Stützträger für die Flüssigmembran dient und die im nichtgefüllten Zustand in der Regel für beide Flüssigkeiten nicht permeierbar ist. Sieht man also eine hydrophobe Membran zwischen zwei wässrigen Systemen vor, so sind diese nicht ineinander diffundierbar, sofern nicht auf einer Seite hohe Drücke angelegt werden oder aber die Membran zuvor einer speziellen Behandlung unterzogen wird, um diese für Wasser durchlässig zu machen.

Nach der Reinigung kann also dieses getränkte Filter weggeworfen werden, ohne daß eine spezielle Aufarbeitung der Flüssigmembran notwendig wäre. Überdies haftet die Flüssigmembran auf dem polymeren Träger so fest, daß sie weder im nennenswerten Maß von diesem abgelöst wird, noch eine Bildung von Nadellöchern zuläßt, durch die sich die beiden getrennten Flüssigkeiten vermischen können.

Weitere Einzelheiten, Merkmale und Ausführungsformen sind in der Zeichnung unter Bezugnahme auf die Beschreibung erläutert.

Es zeigen

Figur 1 einen Querschnitt durch eine trägergestützte Flüssigmembran und

Figur 2 ein Diagramm, mit der die Naphtolentfernung durch das Enzym UDPGA gezeigt wird.

Zu den in wässrigen Lösungen gelösten Stoffen, die mit der Vorrichtung der Erfindung abgetrennt werden können, gehören sowohl hydrophobe als auch hydrophile Stoffe, die anorganisch oder organischer Art sein können. Dabei spielt es erfindungsgemäß keine wesentliche Rolle, ob diese Stoffe neutral, sauer oder basisch sind. Sie sollen jedoch in der Flüssigkeit, die die nachstehend erläuterte Flüssigmembranschicht bildet, zumindest in einem geringen Umfang löslich sein, um überhaupt in dieses eindringen zu können.

Legt man als zu reinigende Phase Blut vor, beispielsweise um die beim Leberversagen auftretenden Toxine zu entfernen, so wird man als Flüssigmembranphase eine solche Flüssigkeit wählen, die einerseits die Toxine wenigstens etwas zu solvatisieren vermag, andrerseits jedoch für den Patienten unschädlich ist und das Blut nicht angreift.

Das Reinigungssystem, das das Reaktionsmittel enthält, wird so gewählt, daß es einerseits eine bessere Löslichkeit für den abzutrennenden Stoff als die zur Erzeugung der Flüssigmembran dienende Flüssigkeit aufweist und andrerseits den zu extrahierenden Stoff in eine solche Form umzuwandeln vermag, daß er nicht mehr durch die Flüssigmembran rückdiffundieren kann.

Vorzugsweise wird man gleiche Flüssigkeiten für die zu extrahierende Phase und für die das Reaktionsmittel enthaltende Phase, insbesondere Wasser, einsetzen. Zwischen diesen beiden Phasen befindet sich dann als im wesentlichen zweidimensional angeordnete Phase die Flüssigmembran aus einem Lösungsmittel, das mit den beiden vorgenannten Phasen nicht mischbar ist.

Bei der Extraktion dringt die zu extrahierende Komponente nach der Berührung mit der Flüssigmembranphase in diese ein und permeiert diese. Sie tritt dann in die das Reaktionsmittel enthaltende Phase ein und wird dort in eine nicht durchdringungsfähige Form umgewandelt, so daß eine Rückdiffusion ausgeschlossen ist. Somit kann sich kein Gleichgewicht zwischen den beiden Phasen einstellen, so daß die zu extrahierende Komponente vollständig aus der zu reinigenden Phase abgetrennt werden kann. Diese Extraktion ist dann natürlich beendet, wenn entweder die zu reinigende Phase vollständig gereinigt ist oder aber sich zwischen den beiden Phasen hinsichtlich der abzutrennenden Komponenten ein Gleichgewicht eingestellt hat. In einem solchen Fall würde dann die Hinreaktion die Rückreaktion aufheben.

Andrerseits kann natürlich die Einstellung eines Gleichgewichts zwischen diesen beiden äußeren Phasen dadurch unterdrückt werden, daß die das Reinigungsmittel enthaltende Phase im Kreis geführt wird und dabei von der abgetrennten Komponente befreit wird. So kann beispielsweise diese Komponente in einem Adsorptionsfilter, auf einer Ionenaustauschersäule u. dgl. abgetrennt werden, so daß die Phase erneut wiederum in gereinigtem Zustand an der Flüssigmembran vorbeigeführt werden kann.

Nach dem erfindungsgemäßen Verfahren können beispielsweise schwach saure Substanzen abgetrennt werden, zu denen insbesondere die Lebertoxine Phenole, Merkaptane und Fettsäuren gehören. So kann beispielsweise in der das Reaktionsmittel enthaltenden Phase Wasser als Lösungsmittel vorliegen, das Uridin-5'-diphospho-glucorunat (UDPGA) und die entsprechende UDPGA-Transferase zur Entfernung von Phenol nach dem folgenden Schema enthält.

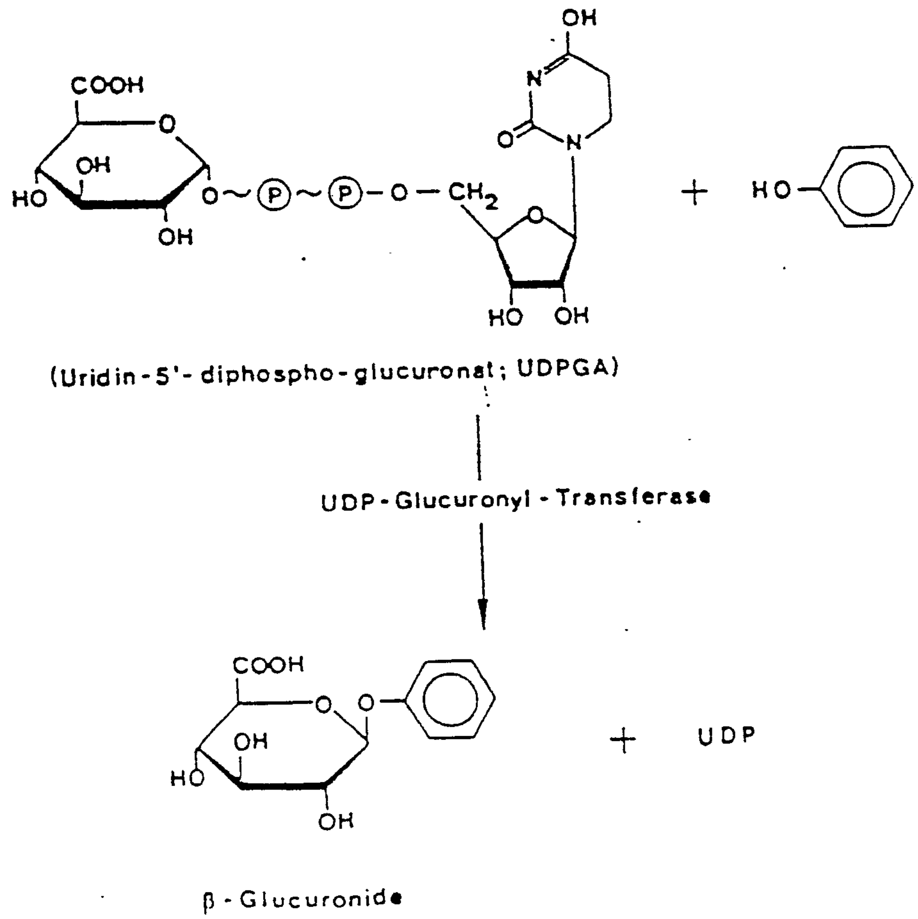


Mit diesem Verfahren kann beispielsweise das normalerweise hydrophobe Phenol in ein wasserlösliches Glucuronid überführt werden, das nicht mehr rückdiffundieren kann.

Zur Abtrennung von Merkaptanen hat sich insbesondere das Enzym S-Methyltransferase als sehr wirkungsvoll erwiesen, mit dem die Merkaptane transmethyliert werden können.

Als weiterhin vorteilhaftes Enzym kann die Glutathiontransferase eingesetzt werden, mit der Glutathion und bestimmte polyzyklische Kohlenwasserstoffe konjugiert werden können.

Als ebenfalls sehr nützlich hat sich das Cytochrome-p-450 zusammen mit der NADPH-Cytochrome-p-450-Reductase erwiesen, mit der bestimmte Hydroxilierungsreaktionen ablaufen können.

Weiterhin kann die Sulfattransferase zusammen mit dem Kofaktor PAPS eingesetzt werden.

Neben den vorstehenden Enzymen können diese schwach sauren Verbindungen natürlich auch mit entsprechenden Basen als Reaktionsmittel, beispielsweise mit NaOH, KOH, $K_2CO_3$ oder organischen Aminen umgesetzt und in eine ionische, nicht durchdringungsfähige Form überführt werden.

Andrerseits können jedoch aber auch die abzutrennenden Komponenten in einer Komplexreaktion, beispielsweise mit EDTA, komplexiert, durch Änderung des pH-Wertes in eine andere Struktur überführt, durch eine Redoxreaktion in einen anderen elektronischen Zustand umgewandelt und/oder durch physikalische Adsorption aus dem Reaktor entfernt werden.

Es muß nicht besonders hinzugefügt werden, daß natürlich auch andere Enzyme, beispielsweise technisch einsetzbare Enzyme, wie Phenolasen u. dgl. eingesetzt werden können. Weiterhin können natürlich auch andere Reaktionen zur Abtrennung der Komponenten Verwendung finden, sofern sie den abzutrennenden Stoff in eine nichtpermeierbare Form umwandeln können.

Andrerseits können jedoch auch schwach basische Verbindungen, wie $NH_3$, das ebenfalls ein starkes Toxin für den menschlichen Organismus darstellt, durch eine entsprechendestarke Säure als Reaktionsmittel abgetrennt werden. Als Säuren kommen beispielsweise die anorganischen Mineralsäuren, wie HCl, $H_2SO_4$ u. dgl. in Frage.

Weiterhin können gelöste Substanzen durch ein fällendes Reaktionsmittel ausgefällt und somit in eine nicht durchdringungsfähige Form überführt werden. So können beispielsweise Schwermetallionen

durch Reaktion mit $H_2S$ abgetrennt und Cyanwasserstoffsäure durch Reaktion mit Silberionen abgetrennt werden, wobei jedoch die Toxizität dieser Trennmittel zu beachten ist.

Um die Permeation von Ionen durch die Flüssigmembran zu erleichtern, kann diese spezielle Zusätze aufweisen, die die Permeation der Ionen durch ihre Wechselwirkung und Lösung dieser Ionen erleichtern.

So kann eine polyfunktionale Sulfonsäure, eine polyfunktionale Carbonsäure oder eine polyfunktionale Organophosphorsäure der Flüssigmembranschicht in Form von Ionenaustauscherverbindungen zugesetzt werden, um die Entfernung von Kationen aus wässriger Lösung zu erleichtern. Diese Ionenaustauscherverbindungen haben im allgemeinen ein Molekulargewicht von 200-10 000 und ein Verhältnis von Kohlenstoffatomen zur funktionalen Gruppe von über 5.

Beispiele für derartige Ionenaustauscherverbindungen, die sich für den Transport durch die Membran eignen, sind Derivate von Styrol, wie sulfonierte Styrolkopolymere, Styrol-Maleinsäurekopolymere, Styrol-Acrylpolymere, Styrol-Acrylkopolymere, Naphtinsäuren u. dgl.

In entsprechender Weise können natürlich Anionen mit Hilfe von polyfunktionalen Aminen in Form ihrer Ionenaustauscher abgetrennt werden. Hierfür eignen sich wiederum Styrolderivate mit entsprechenden quaternären Ammoniumgruppen.

Mit einer derartigen Modifizierung der Flüssigmembran können Ionen erheblich leichter diese durchdringen und somit schneller abgetrennt werden.

Die Wahl des Lösungsmittels für die Flüssigmembranphase erfolgt in Abhängigkeit von den Lösungsmitteln, die zunächst die abzutrennenden Komponente und das Reaktionsmittel enthalten. Dieses Lösungsmittel ist bei biologischen Flüssigkeiten Wasser, in dem die abzutrennenden Komponenten gelöst sind. Als Lösungsmittel für das Reaktionsmittel wird in vorteilhafter Weise ebenfalls Wasser eingesetzt. Es kann jedoch aber auch auf dieser Seite ein Lösungsmittel eingesetzt werden, das mit dem zur Erzeugung der Flüssigmembran verwendeten Lösungsmittel identisch ist.

Wird das polare Wasser als Lösungsmittel verwendet, so setzt man als Lösungsmittel zur Erzeugung der Flüssigmembranphase ein im wesentlichen unpolares Lösungsmittel ein, das allenfalls eine sehr geringe Löslichkeit in Wasser besitzt.

Beispiele für in Wasser nichtlösliche oder damit nicht mischbare Lösungsmittel sind höherkettige Kohlenwasserstoffe, vorzugsweise Paraffine oder Isoparaffine, halogenierte Kohlenwasserstoffe, Ether, höhere oxygenierte Verbindungen, wie Alkohole, Ketone, Säuren und Ester. Weiterhin können hierfür Siliconöle, Öle natürlichen und tierischen Ursprungs, Naphtene und Aromaten mit einem Molekulargewicht bis 1 000 verwendet werden.

Bevorzugt sind für die Anwendung beim Menschen stark raffinierte Mineralöle. Weiterhin können Öle pflanzlichen und tierischen Ursprungs in vorteilhafter Weise eingesetzt werden, die vorzugsweise stark hydriert sind, d. h. mindestens 10 Gew.% mehr Wasserstoff enthalten als bei normaler Sättigung.

Weiterhin können dimethylierte Silicone eingesetzt werden. Ebenfalls geeignet sind perhalogenierte höherkettige Kohlenwasserstoffe.

Derartige Lösungsmittel werden beispielsweise von der Firma Merck, Darmstadt, unter der Bezeichnung « Paraffindickflüssig » und « Parafindünnflüssig », von der Firma ESSO unter der Bezeichnung « Bayol 90 » oder « S 100 N », von Bayer als Siliconöl A usw. vertrieben.

Diese Lösungsmittel weisen bei normaler Körpertemperatur eine Viskosität von 1-500, insbesondere 10-200 cSt auf.

Um eine im wesentlichen zweidimensionale Flüssigmembran zu erzeugen, wird die vorstehende Flüssigkeit auf einen zweidimensionalen Träger aufgezogen. Dieser Träger weist vorzugsweise die gleichen polaren Eigenschaften wie das Lösungsmittel zur Erzeugung der Flüssigmembran auf. Dadurch läßt sich diese Flüssigkeit ohne Schwierigkeiten auf den Stützträger aufziehen und wird regelmäßig von diesem aufgesogen.

Dabei ist es zweckmäßig, daß dieser Stützträger selbst eine Membran ist, d. h. nur für bestimmte Stoffe mit einer bestimmten Größe durchlässig ist. Dieses Trennvermögen hängt natürlich von der Vielzahl der Membranöffnungen ab, mit der die Membran versehen ist. Deswegen trifft also der mittlere Durchmesser der Membranöffnungen die Selektion der Teilchen. Erfindungsgemäß wird der Durchmesser einer Membranöffnung so gewählt, daß die sich nach dem Aufsaugen darin befindliche Flüssigkeit so fest haftet, daß sie selbst bei einem Überdruck von bis zu 200 mmWs nicht aus dieser Öffnung gedrückt wird.

Die Dicke der Membran ist ebenfalls zu beachten, da diese die Länge der Öffnungen und damit die von den abzutrennenden Stoffen zu permeierende Strecke festlegt. Diese Strecke ist umgekehrt proportional zur Permeationsgeschwindigkeit, so daß es vorteilhaft ist, eine möglichst dünne Membran einzusetzen, wenn eine hohe Abtrenngeschwindigkeit erreicht werden soll.

Es hat sich herausgestellt, daß die Membranen, die üblicherweise für Plasmafilter bei künstlichen Nieren eingesetzt werden, dieses erfordernisse erfüllen, so daß es zweckmäßig ist, auf diese Membranen zurückzugreifen. Dabei spielt es keine wesentliche Rolle, ob diese Membranen im wesentlichen eben ausgebildet sind oder aber in Form eines Hohlfadens vorliegen. Während eine ebene Membran eine zweidimensionale Struktur aufweist, besitzt ein Hohlfaden einen Kanal, durch den eine der beiden Phasen geleitet werden kann und von dem sich radial durch die Wand die Membranöffnungen erstrecken.

Derartige Filter bestehen, sofern sie aus einer ebenen Membran aufgebaut werden, aus einer Vielzahl

von übereinander gestapelten Membranlagen und, sofern sie aus Hohlfäden aufgebaut sind, aus einem Bündel von Hohlfäden, die innerhalb eines Gehäuses angeordnet sind und deren Enden jeweils von einer Dichtmasse umgeben sind. Beide Filterarten erlauben den Zutritt von zwei Flüssigkeiten durch jeweils zwei entsprechende Zulauf- und Ablaufstutzen.

Beispiele für polymere Materialien derartiger Membranen sind Poly(aromatische) amide, wie Polyamid-Benzoehydrazid, Polycarbonat, Polysulfone, Polyether, Ester der Polyacrylsäure, Polyethylen, Polypropylen, Polybutene, Polyurethan, Polyisobutylen, Polystyrole, Polyvinylether, Polyester, PTFE, u. dgl.

Bevorzugt sind Polyethylen und Polypropylen. Besonders bevorzugt ist ein Hohlfaden auf der Basis von Polypropylen, wie er beispielsweise von der Firma Enka AG unter der Bezeichnung PS 504 bzw. 510 hergestellt wird.

Bei derartigen Membranen hat es sich als zweckmäßig erwiesen, daß die Membrandicke in einem Bereich von 1-500, vorzugsweise 10-300, insbesondere 30-200 μm liegt.

Die maximale Öffnungs- oder Porenweite kann ebenfalls in einem weiten Bereich variieren. Zweckmäßigerweise liegt sie in einem Bereich von 0,01-100, vorzugsweise 0,1-20, insbesondere 0,2-10 μm.

Die erfindungsgemäße Flüssigmembran wird dadurch hergestellt, daß man die Stützmembran solange mit der Flüssigkeit zur Erzeugung der Flüssigmembran tränkt, bis sich sämtliche Poren der Stützmembran mit der Flüssigkeit vollgesogen haben. Dabei ist es gleichgültig, ob die Flüssigkeit durch den Filter läuft, der aus einer Vielzahl derartiger Membranen besteht, oder aber ob der Filter direkt in die Flüssigkeit getaucht wird. Üblicherweise wird zunachst die gesamte einströmende Flüssigkeit vom Filter aufgesogen, so daß vor der Sättigung der Membranen keine Flüssigkeit aus dem Filter austritt. Wenn dieser Punkt erreicht ist, also Flüssigkeit aus dem Filter heraustritt, kann der Tränkvorgang abgebrochen werden.

Als besonders vorteilhaft hat es sich herausgestellt, daß dieser Tränkvorgang bereits werksseitig durchgeführt wird, so daß das Filter nach der ebenfalls werksseitig erfolgenden Sterilisation sofort ohne Vorbehandlung bettseitig eingesetzt werden kann.

Ein derart behandelter Filter kann über eine lange Zeitdauer den Reinigungsschritten unterzogen werden, ohne daß sich die Flüssigkeit, die die Flüssigmembran darstellt, aus den Membranporen löst. Sollte dies dennoch der Fall sein, so gestattet die ebenfalls hydrophobe Membran keinen Austausch zwischen den beiden getrennten Flüssigkeiten, so daß eine Vermischung verhindert wird. Somit kann eine hochspezifische Trennreaktion ohne Nebenwirkungen über einen langen Zeitraum ablaufen, ohne daß es einerseits zur Permeation von Teilchen kommt, deren Durchmesser über dem Durchmesser der Porendurchmesser liegt, andrerseits die Flüssigmembran selektiv extrahiert und somit keine unerwünschten Nebenextraktionen auftreten.

Das Verfahren kann bei jeder Temperatur durchgeführt werden, bei der die Flüssigmembran und die Stützmembran stabil bleiben. Zweckmäßigerweise wird man entweder bei Umgebungstemperatur oder bei der Körpertemperatur des Patienten arbeiten.

Auch der Druck ist an sich unkritisch. Er muß jedoch so ausgelegt sein, daß die Flüssigmembran nicht zusammenbricht, d. h. daß die Flüssigkeit nicht aus den Membranporen ausgetrieben wird. Man wird zweckmäßigerweise ohne Anlegen eines Transmembrandrucks arbeiten, da nur die gelöste Substanz, nicht jedoch das Lösungsmittel selbst durch die Membran abgezogen werden soll.

In Fig. 1 ist eine erfindungsgemäß abgestützte Flüssigkeitsmembran 10 vergrößert gezeigt. Sie besteht aus einer polymeren Membran 12 einer bestimmten Dicke d, die im wesentlichen der zu permeierenden Strecke entspricht. Die polymere Membran 12 weist eine Vielzahl von Poren oder Öffnungen 14 auf, die diese Membran 12 vollständig durchsetzen, so daß Stoffe, deren Durchmesser kleiner ist als der Durchmesser a dieser Poren, diese Poren 14 durchdringen können.

Die Membran 12 selbst ist aus einer der vorstehend genannten Materialien, insbesondere aus Polypropylen gefertigt und kann, wie ebenfalls vorstehend festgestellt, die Form einer Hohlfadenmembran oder einer ebenen Membran besitzen.

Die beiden Oberflächen 16 und 18 der Membran 12 sowie die Poren 14 sind mit der Flüssigkeit 20 beschichtet bzw. gefüllt. Diese Flüssigkeit 20 besitzt im wesentlichen die gleichen polaren Eigenschaften wie die Stützmembran 12, so daß sowohl sämtliche Poren 14 mit der Flüssigkeit 20 gefüllt sind, als auch die Oberflächen 16 und 18 mit einem dünnen Film der Flüssigkeit 20 beschichtet sind. Die mit dem Film 22 der Flüssigkeit 20 beschichtete Oberfläche 16 steht mit der vorzugsweise wässrigen Lösung 24 in Verbindung, die die abzutrennenden Partikel 26 aufweist. Diese Partikel 26 können sowohl unpolarer als auch polarer Natur sein ; vorzugsweise sind sie unpolarer Natur, so daß sie von der üblicherweise ebenfalls unpolaren Flüssigkeit 20 leicht extrahiert werden können. Dabei ist die Permeationsrichtung dieser Teilchen mit einem Pfeil gekennzeichnet.

Nachdem das Teilchen 26 in die Schicht 22 eingedrungen ist und die Pore 14, die mit der Flüssigkeit 20 gefüllt ist, durchwandert hat, trifft sie auf die Schicht 28, die auf der anderen Oberfläche 18 der Membran 12 angeordnet ist. Diese Schicht 28 steht mit der Flüssigkeit 30 in Verbindung, die das Reaktionsmittel 32 enthält, das unter Bildung einer nicht durchdringungsfähigen Form mit den abzutrennenden Teilchen 26 reagiert.

Die erfindungsgemäße Vorrichtung kann natürlich nicht nur zur Reinigung von endogenen Toxinen,

sondern auch zur Entfernung von exogenen Toxinen, beispielsweise zur Entfernung von in Überdosis eingenommenen Arzneimitteln eingesetzt werden.

Das Beispiel erläutert die Erfindung.

Beispiel

Es wird ein Filter aus ca. 30 Hohlfäden eingesetzt, die an ihrem stirnseitigen Ende mit der zu reinigenden Flüssigkeit beaufschlagt werden, die durch den kanal des Hohlfadens strömt. Die Fäden selbst befinden sich in einem Behälter, der vier Öffnungen aufweist. Jeweils zwei Öffnungen stehen mit dem stirnseitigen Ende der Hohlfadenmembranen in Verbindung, während die anderen beiden Öffnungen mit dem Innenraum des Behälters in Verbindung stehen, der jeweils von dem stirnseitigen Ende der Hohlfadenmembranen hermetisch getrennt ist. Durch die letzten beiden Öffnungen strömt die das Reaktionsmittel enthaltende Flüssigkeit, die die Außenoberfläche der Hohlfadenmembranen umströmt.

Es wird eine Hohlfadenmembran aus Polypropylen eingesetzt, die von der Firma Enka AG unter der Bezeichnung PS 510 vertrieben wird. Dabei hat der Kanal einen mittleren Durchmeser von 0,35 mm, eine mittlere Wandstärke von 0,15 mm und einen maximalen Porendurchmesser von 0,55 µm. Die aktive Oberfläche liegt bei 70 $cm^2$.

Vor der Reinigungsoperation wird dieses Filter mit einer 1 : 1-Mischung aus Paraffindickflüssig und Paraffindünnflüssig, wie es von der Firma Merck, Darmstadt, vertrieben wird, gefüllt, wobei es gleichgültig ist, durch welche der vier Öffnungen dieses Paraffin eingefüllt wird. Die Poren der Stützmembranen saugen sich innerhalb kürzester Zeit, d. h. spätestens nach 1 Min. mit dem Paraffin voll. Vor dem Gebrauch spült man die Membran blutseitig mit physiologische Kochsalzlösung, so daß sie danach einsatzbereit ist. Die trägergestützte Flüssigmembran ist nunmehr einsatzbereit.

Als reinigende Flüssigkeit werden 40 ml einer wässrigen Lösung von 2 mmol/l Naphtol in 100 mmol/l Trispuffer vorgelegt. Diese Lösung wird mit einer Pumpgeschwindigkeit von 2 ml/Min. umgepumpt. Auf der anderen Seite liegen als Reinigunslösung 13 ml Enzymlösung vor. Die Enzymlösung besteht aus einer Präparation von UDP-Glucuronyl-Transferase, der UDPGA zugesetzt ist. Der Proteingehalt der Enzymlösung beträgt 4 mg/ml und die Konzentration von UDPGA 1,92 mmol/l. Die spezifische Aktivität der Enzymlösung gegenüber Naphtol beträgt 30 µmol/Min. mg. Die Enzymlösung wird mit einer Pumpgeschwindigkeit von 0,36 ml/Min. umgepumpt.

Das Reaktionsergebnis ist aus der Fig. 2 ersichtlich, in der die Abnahme von UDPGA und die Entstehung von UMP (Uridinmonophosphat) und des Glucuronids gezeigt ist. Daraus ist ersichtlich, daß die Reaktion offensichtlich nur von der Konzentration des UDPGA abhängt, das bei dieser Umsetzung vollständig verbraucht wird. Zugleich steigt die Konzentration des Glucuronids an, was auf die Entfernung des Naphtols aus der zu reinigenden Flüssigkeit hinweist.

**Patentansprüche**

1. Vorrichtung zur Entfernung von toxischen Stoffen aus biologischen Flüssigkeiten (24) mit wenigstens einer mikroporösen polymeren Membran (12), deren Poren (14) mit einer mit der biologischen Flüssigkeit nicht mischbaren organischen Flüssigkeit (20) gefüllt ist, wobei die Membran innerhalb eines Gehäuses angeordnet ist und die dadurch gebildeten Gehäusekammern mit je einem Zu- und Ablaufstutzen versehen sind, von denen die eine Kammer mit der biologischen Flüssigkeit und die andere Kammer mit einer Abtrennflüssigkeit durchströmbar sind, dadurch gekennzeichnet, daß die Membran (12) aus einem hydrophoben Polymerisat besteht und die mikroporösen Poren (14) der hydrophoben Membran mit einer hydrophoben organischen Flüssigkeit (20) unter Erzeugung einer für Wasser nicht überwindbaren Grenzschicht gefüllt sind, die von hydrophoben Substanzen (26) diffundierbar ist.

2. Vorrichtung nach Anspruch 1, dadurch gekennzeichnet, daß die hydrophobe organische Flüssigkeit (20) ein stark raffiniertes Mineralöl, ein Öl pflanzlichen und/oder tierischen Ursprungs, das stark hydriert ist, ein dimethyliertes Silicon und/oder ein perhalogenierter Kohlenwasserstoff ist.

3. Vorrichtung nach Anspruch 1, dadurch gekennzeichnet, daß Polyethylen oder Polypropylen als hydrophobe Polymerisate in Frage kommen.

4. Vorrichtung nach Anspruch 3, dadurch gekennzeichnet, daß die Membran (12) eine Hohlfadenmembran auf der Basis von Polypropylen ist.

5. Vorrichtung nach Anspruch 1, dadurch gekennzeichnet, daß die hydrophobe organische Flüssigkeit (20) eine Viskosität von 1-500 cSt aufweist.

6. Vorrichtung nach Anspruch 1, dadurch gekennzeichnet, daß die Membran (12) eine Dicke von 1-500 µm aufweist.

7. Vorrichtung nach Anspruch 6, dadurch gekennzeichnet, daß die Membran (12) eine Dicke von 30-200 µm aufweist.

8. Vorrichtung nach Anspruch 1, dadurch gekennzeichnet, daß der mittlere Porendurchmesser (a) bei 0,01-100 µm liegt.

9. Vorrichtung nach Anspruch 1, dadurch gekennzeichnet, daß eine Vielzahl von Hohlfäden aus einer Polypropylenmembran (12) vorgesehen ist, die mit Paraffin mit einer Viskosität von 10-200 cSt bei Körpertemperatur gefüllt ist.

## Claims

1. Device for removing toxic substances from biological fluids (24) by means of at least one microporous polymeric membrane (12), the pores (14) of which are filled with an organic fluid (20) which is immiscible with the biological fluid, the membrane being arranged within a housing and the housing chambers thus formed each being provided with a feed branch and a discharge branch, flow of the biological fluid being possible through one chamber and flow of a separating fluid being possible through the other chamber, characterised in that the membrane (12) consists of a hydrophobic polymer and the microporous pores (14) of the hydrophobic membrane are filled with a hydrophobic organic fluid (20), producing a boundary layer which is impassable for water and through which hydrophobic substances (26) can diffuse.

.2. Device according to Claim 1, characterised in that the hydrophobic organic fluid (20) is a highly refined mineral oil, a highly hydrogenated oil of vegetable and/or animal origin, a dimethylated silicone and/or a perhalogenated hydrocarbon.

3. Device according to Claim 1, characterised in that polyethylene or polypropylene can be used as the hydrophobic polymers.

4. Device according to Claim 3, characterised in that the membrane (12) is a hollow-fibre membrane based on polypropylene.

5. Device according to Claim 1, characterised in that the hydrophobic organic fluid (20) has a viscosity of 1 to 500 cSt.

6. Device according to Claim 1, characterised in that the membrane (12) has a thickness and of 1 to 500 µm.

7. Device according to Claim 6, characterised in that the membrane (12) has a thickness of 30 to 200 µm.

8. Device according to Claim 1, characterised in that the mean pore diameter (a) is 0.01 to 100 µm.

9. Device according to Claim 1, characterised in that a multiplicity of hollow-fibres consisting of a polypropylene membrane (12) filled with paraffin of a viscosity of 10 to 200 cSt at body temperature is provided.

## Revendications

1. Dispositif pour éliminer des substances toxiques de liquides biologiques (24) à l'aide d'au moins une membrane polymère microporeuse (12) dont les pores (14) sont remplis d'un liquide organique (20) non miscible avec le liquide biologique, la membrane étant disposée à l'intérieur d'un logement et les chambres ainsi formées dans le logement étant équipées chacune d'une tubule d'admission et d'une tubulure d'évacuation, l'une des chambres pouvant être traversée par un écoulement du liquide biologique et l'autre par un écoulement du liquide séparateur, ce dispositif se caractérisant en ce que la membrane (12) consiste en un polymère hydrophobe et les micropores (14) de la membrane hydrophobe sont remplis d'un liquide organique hydrophobe (20) avec formation d'une couche limite que l'eau ne peut traverser, et qui permet la diffusion de substances hydrophobes (26).

2. Dispositif selon la revendication 1, caractérisé en ce que le liquide organique hydrophobe (20) est une huile minérale très raffinée, une huile d'origine végétale et/ou animale, fortement hydrogénée, un silicone diméthylé et/ou un hydrocarbure perhalogéné.

3. Dispositif selon la revendication 1, caractérisé en ce que les polymères hydrophobes consistent en polyéthylène ou polypropylène.

4. Dispositif selon la revendication 3, caractérisé en ce que la membrane (12) est une membrane à filaments creux à base de polypropylène.

5. Dispositif selon la revendication 1, caractérisé en ce que le liquide organique hydrophobe (20) a une viscosité de 1 à 500 cSt.

6. Dispositif selon la revendication 1, caractérisé en ce que la membrane (12) a une épaisseur de 1 à 500 µm.

7. Dispositif selon la revendication 6, caractérisé en ce que la membrane (12) a une épaisseur de 30 à 200 µm.

8. Dispositif selon la revendication 1, caractérisé en ce que le diamètre de pore moyen (a) va de 0,01 à 100 µm.

9. Dispositif selon la revendication 1, caractérisé en ce que l'on utilise une membrane de polypropylène (12) consistant en un grand nombre de filaments creux et qui est garnie d'huile de paraffine à une viscosité de 10 à 200 cSt à la température du corps.

Fig. 1

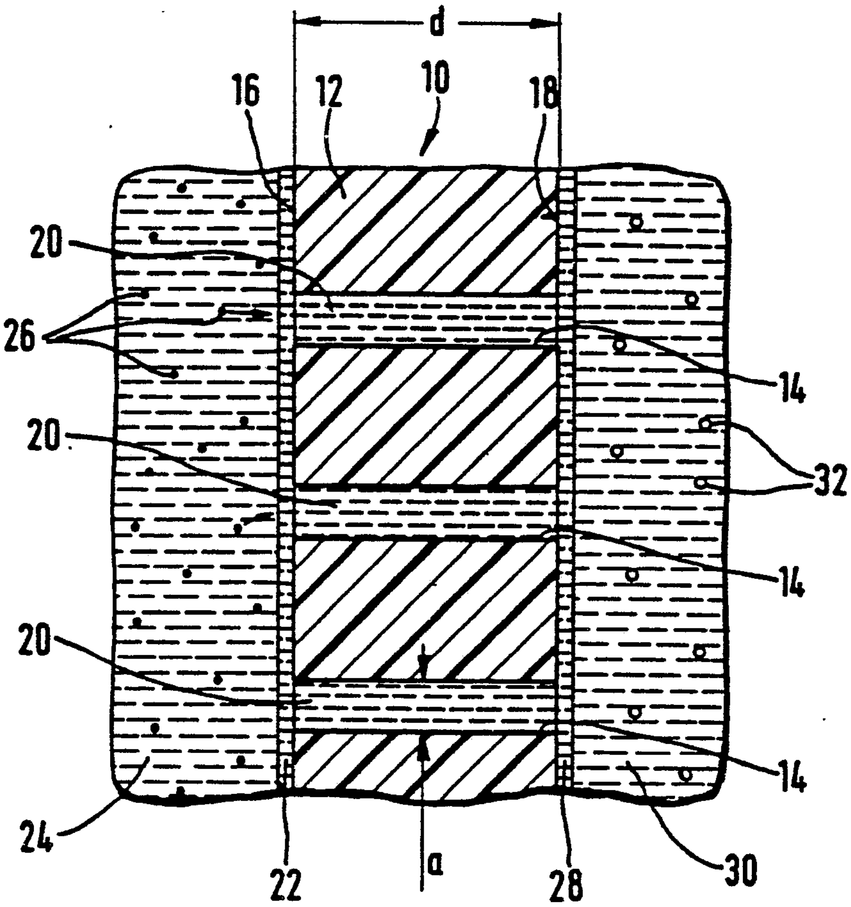

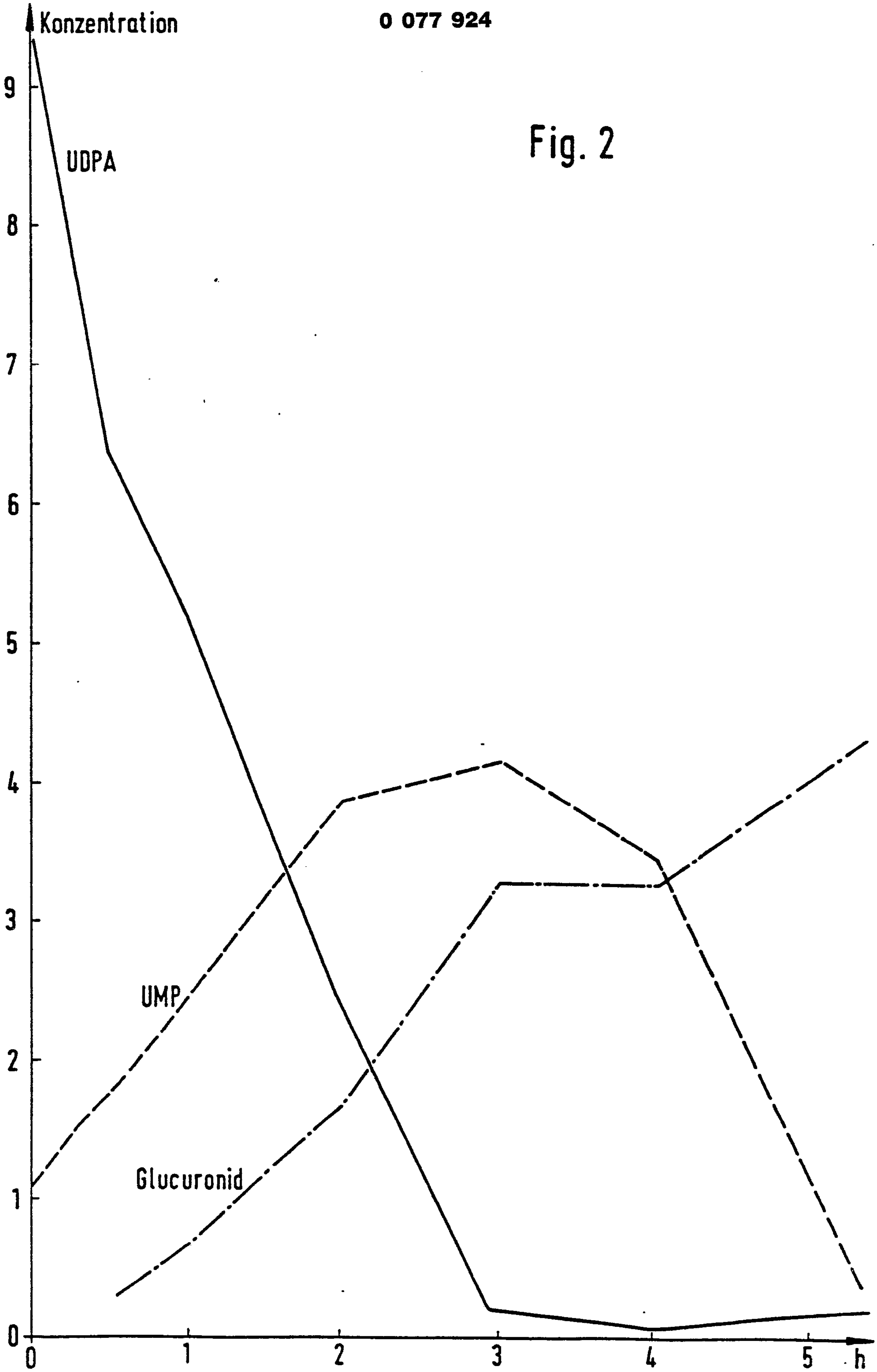


Fig. 2